(19) Europäisches Patentamt / European Patent Office / Office européen des brevets

(11) **EP 1 753 517 B1**

(12) **EUROPÄISCHE PATENTSCHRIFT**

(45) Veröffentlichungstag und Bekanntmachung des Hinweises auf die Patenterteilung:
**10.07.2013 Patentblatt 2013/28**

(51) Int Cl.:
**B01D 15/18** (2006.01)     **F16K 27/00** (2006.01)
**G01N 30/42** (2006.01)

(21) Anmeldenummer: 05742674.4

(22) Anmeldetag: **14.05.2005**

(86) Internationale Anmeldenummer:
**PCT/EP2005/005313**

(87) Internationale Veröffentlichungsnummer:
**WO 2005/113101 (01.12.2005 Gazette 2005/48)**

(54) **VERFAHREN ZUR HERSTELLUNG VON CHEMISCHEN UND PHARMAZEUTISCHEN PRODUKTEN MIT INTEGRIERTER MEHRSÄULEN-CHROMATOGRAPHIE**

METHOD FOR THE PRODUCTION OF CHEMICAL AND PHARMACEUTICAL PRODUCTS WITH INTEGRATED MULTICOLUMN CHROMATOGRAPHY

PROCEDE DE PRODUCTION DE PRODUITS CHIMIQUES ET PHARMACEUTIQUES A CHROMATOGRAPHIE MULTICOLONNE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **21.05.2004 DE 102004025000**

(43) Veröffentlichungstag der Anmeldung:
**21.02.2007 Patentblatt 2007/08**

(60) Teilanmeldung:
**11155542.1 / 2 336 617**

(73) Patentinhaber: **Bayer Intellectual Property GmbH**
**40789 Monheim (DE)**

(72) Erfinder:
• **STRUBE, Jochen**
  **58099 Hagen (DE)**
• **KLATT, Karsten-Ulrich**
  **51379 Leverkusen (DE)**
• **NOETH, Gerhard**
  **51061 Köln (DE)**
• **GREIFENBERG, Joern**
  **51429 Bergisch Gladbach (DE)**
• **BÖCKER, Sebastian**
  **51371 Leverkusen (DE)**
• **KANSY, Heinz**
  **51061 Köln (DE)**
• **JÄHN, Peter**
  **51375 Leverkusen (DE)**
• **JUSTEN, Berthold**
  **51399 Burscheid (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
EP-A- 0 878 222    EP-A- 1 111 380
US-A- 4 447 329    US-A- 6 099 736

**Beschreibung**

Die Erfindung betrifft ein chromatographisches Verfahren zur Stofftrennung im Rahmen der Herstellung von Chemikalien wie z.B. chiralen Pharmazeutika, Isomeren oder Biomolekülen im Kleinmaßstab und Produktionsmaßstab, basierend auf Simulated Moving Bed (SMB = Gegenstrom Chromatographie) Technologie.

SMB ist ein Verfahren, das kontinuierliche Stofftrennungen erlaubt, indem Gegenstrom zwischen Adsorbens und Mobiler Phase (Flüssigkeit, Gas oder im überkritischen Zustand) imitiert (simuliert) wird.

US Patent No 3,706,612 von A.J. de Rosset und R. W. Neuzil beschreibt eine Simulated Moving Bed (Gegenstrom Chromatographie) Anlage im Pilotmaßstab. Ebenso wird dort ein Betriebsproblem beschrieben, wenn solche Anlagen im Großmaßstab betrieben werden und eine Kreislaufpumpe benutzt wird, um den Umlauf der Flüssigkeit im Prozess zu gewährleisten. Diese Erfindung (US A 3 706 612) beschreibt die Verwendung eines Ventils am Ausgangsende jedes Adsorbensbettes, um einen entgegengesetzten Fluss zu verhindern.

US Patent No 4,434,051 von M. W. Golem beschreibt einen Apparat, der Gegenstrom Chromatographie erlaubt, indem eine große Anzahl von Mehrwege- Ventilen anstatt eines einzigen Rotationsventils benutzt werden.

Die Trennung von racemischen Gemischen an chiralen Adsorbens wird in einem Artikel im Journal of Chromatography, 590 (1992), pp. 113-117 beschrieben, dort wird eine alternative Anordnung aus 8 Adsorptions-Kammern und 4 Rotationsventilen benutzt.

US Pat No. 3,268,605 beschreibt ein Steuerungssystem, welches die Flussrate von dreien der Hauptströme durch Flussregler und den vierten Strom durch einen Druckregler steuert. Ein ähnliches Steuerungskonzept für chirale Stoffsysteme wird in WO 92/16274 der Bayer AG beschrieben. Diese Referenz verwendet eine Reihe von Zweiwege- Ventilen, um den Gegenstrom des Adsorbens zu simulieren.

In all diesen bekannten Techniken wird jedoch die Trennleistung durch das Holdup-Volumen der Kreislaufstrom-Pumpe gestört, was durch zusätzliche Maßnahmen, wie z.B. Asynchrones Takten, Veränderung der Säulenlängen oder Flussanpassung [wie z.B. in EP 0688590 A1, Sepharex (Novasep), "Totvolumenkompensation der Kreislaufpumpe durch Reduktion des Volumens" (Länge); "asynchrones Takten" wie in EP 0688589 A1, Sepharex (Novasep); EP 0688588 A1 "Durchsatzänderung der Rezyklierpumpe"] ausgeglichen werden muss. In DE 19833502 A1 der Novasep, wird dazu die SMB Basisregelung über Druck durch gleichzeitige Variation von mindestens zwei Durchsätzen beschrieben.

Konsequenter Weise wurde das Asynchrone Takten in einer Zone zum asynchronen Takten mehrerer oder aller Zonen (WO 00/25885 A) weiterentwickelt.

Beispiele für den Einsatz der SMB Technologie liefern z.B. die WO 93/04022 A der Daicel in welcher SMB zur Racemattrennung mit anschließender Re-Racemisierung des unerwünschten Isomers eingesetzt wird, oder WO 91/13046 A der Daicel welche den Einsatz von SMB mit chiraler stationäre Phase ebenfalls zur Racemattrennung beschreibt.

Der Stand der Technik zur Regelung der internen und externen Mengenströme bei der simulierten Gegenstromchromatographie ist z.B. in US Pat. 4499115, US Pat. 5685992, US Pat. 5762806, EP 960642 A1 und DE 19833502 A1 beschrieben.

Üblicherweise werden dort zur Förderung der Fluide 5 Pumpen eingesetzt, wobei sich jeweils eine Pumpe in den entsprechenden Zu- und Abfuhrleitungen - Feed- Eluens, Extrakt - und Raffinatleitungen - befindet, und eine weitere Pumpe innerhalb eines geschlossenen Kreislaufes angeordnet ist. Zur Simulation des Feststoffgegenstromes wird nach einem bestimmten Zeitintervall, der Taktzeit τ, umgetaktet, d.h. durch entsprechende Ventilschaltungen werden die Zugabe- und Entnahmestellen um eine Säule in Fließrichtung der Fluidphase verschoben. Die Kreislaufpumpe "wandert" somit durch die einzelnen Zonen und fördert während eines Umlaufs unterschiedliche Volumenströme.

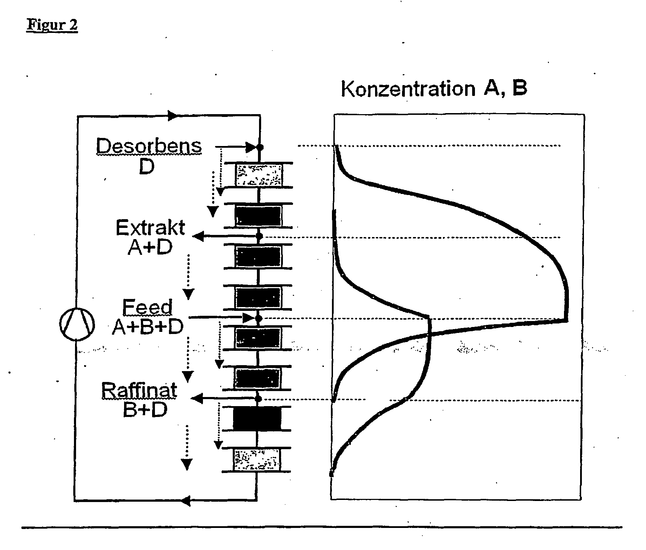

Figur 2 zeigt einen üblichen SMB Prozess. Der Fluidstrom durchläuft beim SMB-Betrieb im Kreislauf mehrere mit Adsorbens gefüllte Festbettsäulen. Die Anlage wird durch die kontinuierliche Zugabe bzw. Entnahme der Feed-, Desorbens, Extrakt- und Raffinatströme in vier funktionelle Zonen unterteilt. Jede einzelne dieser Zonen übernimmt dabei eine spezielle Trenn- bzw. Aufarbeitungsfunktion. Dargestellt ist auch der Recyclestrom, gefördert durch eine Recyclepumpe. Je funktioneller Zone, zwischen den Positionen der externen Zu- und Abfuhrströme, befinden sich jeweils ein bis mehrere Chromatographische Säulen. Das sich bei geeigneter Wahl der Betriebsparameter im zyklisch stationären Zustand innerhalb der SMB Anlage einstellende Konzentrationsprofil der zu trennenden Hauptkomponenten ist schematisch auf dem rechten Teil von Figur 2 relativ zu den Positionen der Zu- und Abfuhrströme zum Zeitpunkt des Taktendes dargestellt.

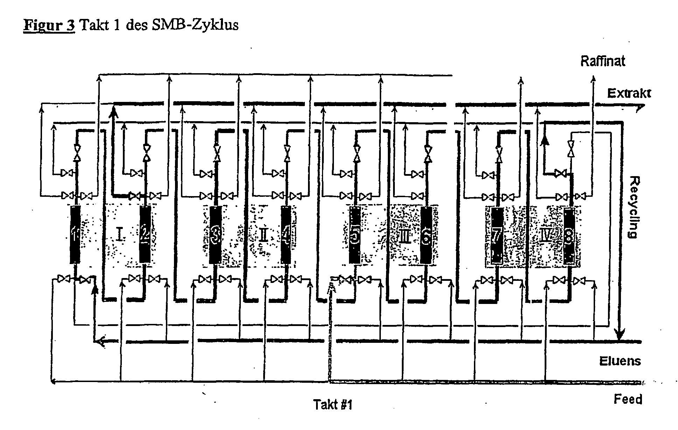

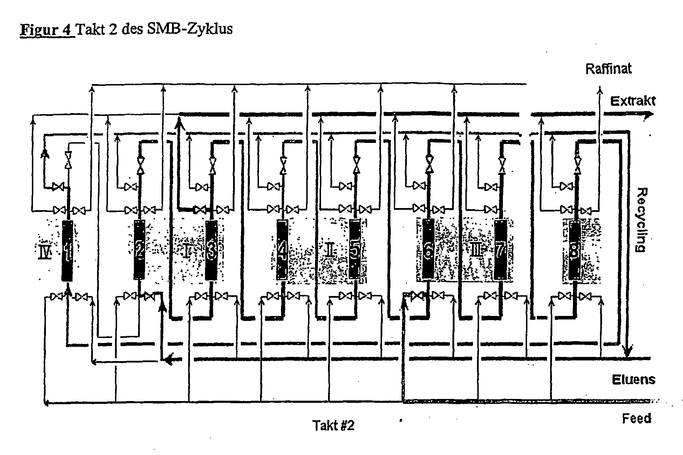

Figur 3 und 4 zeigen schematisch den apparativen Aufbau eines üblichen SMB Verfahrens mit der Anordnung von Einzelventilen in zwei aufeinanderfolgenden Takten. In der Zufuhrleitung jeder Säule 2 Einzelventile für die Schaltung von alternativ Feed- oder Eluensstrom und in der Abfuhrleitung jeder Säule 3 Einzelventile für alternativ Raffinat-, Extrakt- oder Recyclingstrom. Bei jedem weiteren Takt werden die Ventilschaltungen um eine Position auf die nächste Säule verlagert.

Sind die Verbindungsleitungen zwischen den Säulen unterschiedlich lang und beinhalten ein gegenüber dem Säulenvolumen nicht zu vernachlässigendes Totvolumen, so muss dieser Tatsache Rechnung getragen, und einer damit evtl. verbundenen Verschlechterung der Trennleistung entgegengewirkt werden. Mögliche Abhilfe schaffen ein asynchrones Umschalten der Ventile (EP 688589 B), eine spezifische Anpassung der Zonenvolumina (EP 688690 B2) oder eine Anpassung der Fördermenge der Kreislaufpumpe (EP 688588 B1).

Für einen kontinuierlichen, bestimmungsgemäßen Betrieb ist die möglichst exakte Einhaltung der internen und externen Mengenströme eine unabdingbare Voraussetzung. Dazu werden üblicherweise drei der vier zugeführten und abgeführten Mengenströme ($Q_F$, $Q_D$, $Q_{Ex}$ und $Q_{Raf}$) konstant geregelt, während der vierte Teilstrom über einen spezifizierten Systemdruck so nachgeregelt wird, dass dieser Systemdruck konstant bleibt womit die Gesamtmassenbilanz eingehalten wird.

Diese bislang übliche Betriebsweise von SMB Chromatographieanlagen weist daher folgende gravierende Nachteile auf:

● Die Druckregelung muss einerseits sämtliche Störungen im Bereich der Mengenströme möglichst schnell und exakt kompensieren, andererseits wird sie selbst durch betriebsbedingte Druckschwankungen (z.B. auch durch die zyklischen Umschaltvorgänge) teilweise empfindlich gestört. Insbesondere bei hohen Reinheitsanforderungen und/ oder kurzen Zykluszeiten kann dieses zu Instabilitäten bis hin zum Verlust der Trennleistung führen.

● Das Schließen der Mengenbilanz über eine Druckregelung erfordert einen permanent geschlossenen Kreislauf. Kurzfristiges Öffnen des Kreislaufes z.B. zum Ausschleusen von Verunreinigungen ist hiermit nicht möglich.

● Die interne Kreislaufpumpe wird mit ständig wechselnden Mengenströmen konfrontiert, des weiteren verursacht diese Art der Verschaltung variable Totvolumina und somit inhärente Prozessstörungen, die kompensiert werden müssen. Wie bereits erwähnt, gestaltet sich dieses insbesondere bei kurzen Zykluszeiten und anspruchsvollen Trennaufgaben vielfach als schwierig.

Im bestimmungsgemäßen Kreislaufbetrieb existieren beim SMB Prozess generell 4 interne ($Q_I$, $Q_{II}$, $Q_{III}$ und $Q_{IV}$) und 4 externe Mengenströme ($Q_F$, $Q_D$, $Q_{Ex}$ und $Q_{Raf}$), die über folgende Massenbilanzen

$$Q_I = Q_D + Q_{IV}$$
$$Q_{II} = Q_I - Q_{Ex}$$
$$Q_{III} = Q_{II} + Q_F$$
$$Q_{IV} = Q_{III} - Q_{Raf}$$

$$(1)$$

miteinander verknüpft sind. Für die Festlegung des Betriebspunktes müssen 3 externe und ein interner Mengenstrom sowie die Taktzeit $\tau$ derart spezifiziert werden, dass die Trennaufgabe gelöst und dadurch wirtschaftlich optimaler Betrieb bei Einhaltung der vorgegebenen Produktreinheiten erzielt wird. Die Taktzeit $\tau$ bestimmt dabei die "Geschwindigkeit" des scheinbaren Feststoffgegenstroms.

Im gesamten Stand der Technik werden zum Betrieb der SMB jedoch grundsätzlich Kreislaufpumpen eingesetzt, was zu den bereits beschriebenen Problemen durch das Holdup Volumen der Pumpe führt.

Es wurde nun überraschend gefunden, dass wider Erwarten keine Kreislaufstrom-Pumpe notwendig ist, um den Fluidkreislauf in einem SMB aufrecht zu erhalten.

Die vorliegende Erfindung betrifft daher ein SMB Verfahren in welchem statt des bisher üblichen 5 Pumpen-Konzeptes ein 4 Pumpen-Konzept angewendet wird, indem der Eluentstrom mit konstantem Fluss sowie Extrakt-, Raffinat- und Feed-Strom gepumpt werden. Für die zwei Auslass-Ströme sind dabei alternativ auch Regelventile anstelle zwangsfördernder Pumpen möglich.

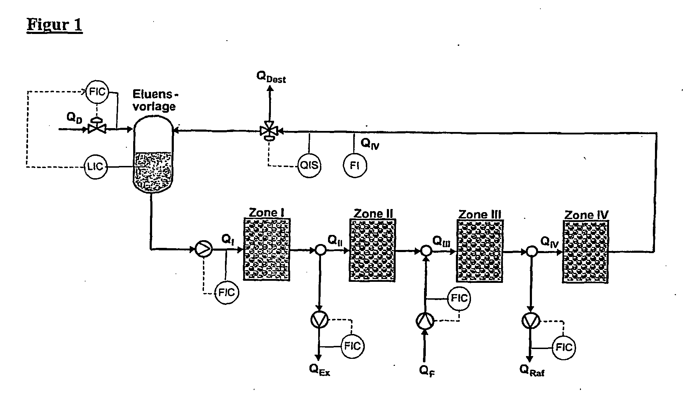

Figur 1 zeigt das Prinzip der erfindungsgemäßen SMB Chromatographieanlage. Die Anlage ist hier nur schematisch dargestellt, es fehlen z.B. die enthaltenen detaillierten Leitungswege, die Ventilverschaltungen sowie die sonstige Instrumentierung. Des weiteren repräsentieren zur besseren Übersicht die dargestellten Blöcke jeweils die funktionellen Zonen und nicht einzelne Trennsäulen. Das Symbol FI stellt eine kontinuierliche Durchflussmessung dar, FIC und LIC repräsentieren kontinuierliche Durchfluss- bzw. Standregelungen inklusive der dazu benötigten Mess- und Stelleinrichtungen. Q stellt, mit unterschiedlichen Indices versehen, jeweils einen Mengenstrom dar, der an einer bestimmten Stelle der Chromatographieanlage auftritt.

Der Kreislaufstrom wird, wie in Figur 1 zu erkennen, mit einem Zwischenbehälter unterbrochen/getrennt. Das erlaubt neben einer robusten Mengenstromregelung zusätzlich eine Ausschleusung von Fraktionen mit potentiellen Verunreinigungen im laufenden Betrieb, die durch geeignete online Analytik wie z.B. UV, NIR, RJ oder US bestimmt werden können (in Figur 1 als QIS gekennzeichnet). Die direkt hinter dem Zwischenbehälter ortsfest angeordnete Pumpe fördert dabei den Eluensstrom mit konstantem Fluss direkt in die erste Trennsäule der SMB Chromatographieanlage, und zwar unabhängig davon, ob das Eluens nach Durchströmen der Anlage ausgeschleust oder in geschlossenem Kreislauf über den Zwischenbehälter rückgeführt wird.

Dadurch, dass eine Kreislaufstrompumpe eingespart wird und eine Eluentpumpe mit konstantem Fluss verwendet wird, ist es nicht notwendig, die Trennleistung störende Holdup-Volumen der Kreislaufstrom Pumpe durch zusätzliche Maßnahmen auszugleichen, wie z.B. Asynchrones Takten, Säulenlängenveränderung oder Flussanpassung (s.o. Stand der Technik). Auch die Weiterentwicklung des Asynchronen Taktens in einer Zone zu dem Asynchronen Takten mehrerer oder aller Zonen wird so überflüssig, denn die Trennleistung kann im erfindungsgemäßen Verfahren schon direkt durch die Holdup-optimierte Verschaltung der erfindungsgemäßen Chromatographieanlage erreicht werden.

Ebenso kann durch die beschriebene Ausschleusung von verunreinigten Eluensfraktionen im Kreislaufstrom aufwendiges Anhalten oder sogar An- und Abfahren der Anlage vermieden werden. Dies erhöht neben der robusteren Steuerung weiterhin die Wirtschaftlichkeit des Verfahrens durch die beschriebene Erfindung.

Das erfindungsgemäße robustere Trennverfahren der Mehr-Säulen-Chromatographie im Gegenstrombetrieb erlaubt zudem eine effizientere Einbindung in den Herstellungsprozess von Chemikalien und Pharmazeutika. So kann ein Reaktor vorgeschaltet und das ausgehende Produkt direkt als Feed mit der Mehr-Säulen Chromatographie Anlage verbunden werden. Ebenso sind Rückführungen von nicht Zielfraktionen nach weiteren Umlagerungen oder Reaktionen, wie z.B. Re-Racemisierung mittels pH- oder Temperaturshift, in das Feedgemisch oder den Reaktor effizienter möglich.

Ein weiterer Punkt ist, dass sowohl die nachgeschaltete Lösungsmittelaufarbeitung als auch Produktaufarbeitung mittels Eindampf-, Trocknungs- und oder Kristallisations-Stufen effizienter durchzuführen ist, da durch die beschriebene Erfindung der Durchsatz höher, die Produktverdünnung niedriger und die Betriebsströme konstanter sind; denn es kann technisch ein Betriebspunkt gewählt werden, der näher am theoretischen Optimum ist.

In einer ganz besonders bevorzugten Ausführungsform wird in die Recycleleitung nach Zone IV (Figur 1) eine kontinuierliche online Analysenmessung QIS eingebracht. Diese löst im Falle einer Verunreinigung des rückgeführten Lösungsmittelstroms (z.B. Durchbruch von Produkt aus Zone IV) eine entsprechende Ventilschaltung aus, so dass der verunreinigte Lösungsmittelstrom ausgeschleust und nicht in die Eluensvorlage zurückgeführt wird.

Die zusätzliche Durchflussmessung im Recyclestrom dient bei qualitätsbedingter Ausschleusung des Recyclestromes zur Bestimmung von $Q_{Dest}$, im bestimmungsgemäßen Betrieb wird durch die Ausnutzung der mit der Messung des Durchflusses $Q_{Dest}$ erzielten Redundanz bei den Mengenstrommessungen und -bilanzen eine Messdatenvalidierung (Data Reconciliation) für sämtliche Mengenströme vorgenommen und damit die Genauigkeit der Mengenstromregelung zusätzlich erhöht.

Die erfindungsgemäße Mengenstromregelung ermöglicht - insbesondere durch den Verzicht auf eine Druckregelung zur Schließung der Massenbilanz - eine genauere und robustere Einstellung der Mengenströme zur Sicherung der Trennleistung der Anlage.

Die ganz besonders bevorzugte erfindungsgemäße Ausführung einer Kombination von Anlagen - und Regelungskonzept ermöglicht sowohl den Betrieb mit geschlossenem als auch mit offenem Kreislauf. Bei offenem Kreislauf kann mittels der online Analysemessung in der Recycleleitung eine evtl. Verunreinigung direkt ausgeschleust werden. Im konventionellen Kreislaufbetrieb ist eine Ausschleusung von Verunreinigungen nur über die Produktströme möglich und somit mit einem Verlust an Ergebnis verbunden.

Die Redundanz bei den erfindungsgemäß vorgesehenen Mengenstrommessungen und der darauf aufbauende Messfehlerabgleich für die Durchflussmessungen erhöht zusätzlich die Genauigkeit der Mengenstromregelung und sichert damit die Erfüllung der Trennaufgabe.

Mit dem erfindungsgemäßen Anlagen- und Regelungskonzept werden variable Totvolumina und die damit verbundenen Prozessstörungen vermieden. Spezielle Gegenmaßnahmen wie z.B. das asynchrone Schalten der Ventile sind somit nicht mehr erforderlich.

Die nachfolgenden Beispiele sollen die vorliegende Erfindung illustrieren ohne sie jedoch einzuschränken:

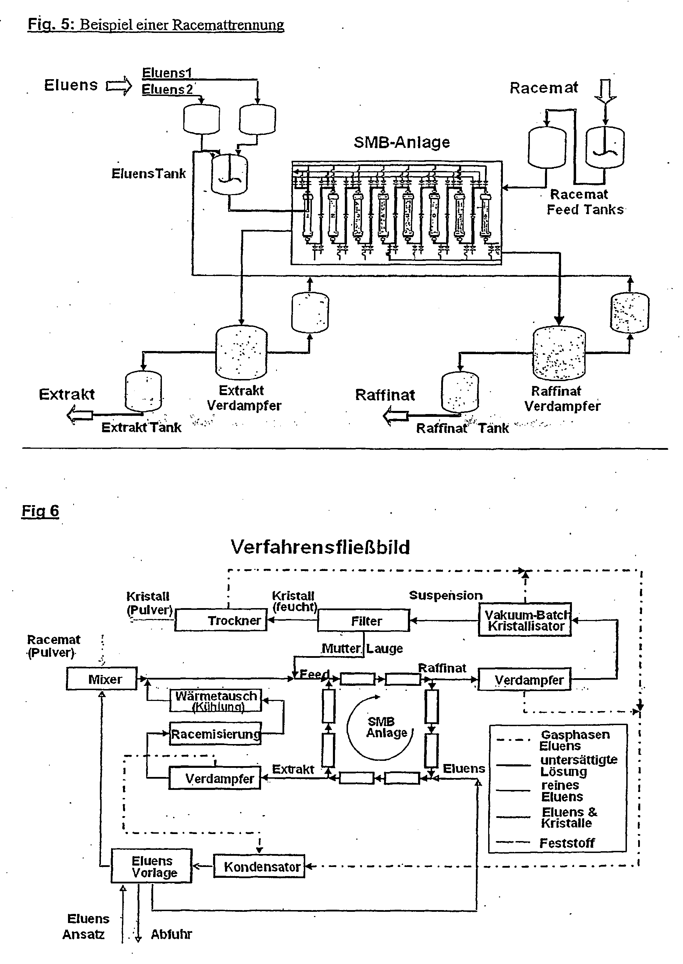

Figur 5 zeigt die Integration des Mehrsäulen Chromatographie Prozesses in ein Gesamtverfahren zur Herstellung von chemischen und pharmazeutischen Substanzen am Beispiel von Razemischen Substanzen. Es besteht die Möglichkeit direkt ohne Zwischenspeicher nach der Reaktion die Reaktionsmischung kontinuierlich in die Chromatographieanlage zu leiten. Weiterhin ist die direkte Aufarbeitung und das Recycling des Lösungsmittels aus den Produktströmen Extrakt und Raffinat in die Eluentvorlage möglich. Die Qualität des Eluenten muss vor erneuter Verwendung in der Chromatographieanlage gemessen und eingestellt werden. Dazu bieten sich je nach geforderter Eluentzusammensetzung eine Reihe von offline Methoden (wie z.B. GC und HPLC) und online Methoden (wie z.B. Ultraschall, kapazitiv, NIR) an. Aus einem Feedbehälter wird in einem weiteren Behälter das Feedgemisch von fester oder fließfähiger Konsistenz in der spezifizierten Eluentzusammensetzung vorgelegt. Extrakt und Raffinat werden aus der Chromatographie Anlage Verdampfern zu geführt und das verdampfte Lösungsmittel in die Eluentvorlagebehälter recyclet. Frisches Lösungsmittel wird aus verschiedenen Eluentvorlagebehältern je nach Anzahl der an der Eluentmischung beteiligten Lösungsmittel zudosiert, bis die geforderte Eluentspezifikation in der Eluent-Zufuhr zur Chromatographie Anlage erreicht ist. Das nach den Verdampfern eingeengte Produkt wird in Behältern gespeichert und in der weiteren Produktaufarbeitung in der Regel kristallisiert, gefiltert, getrocknet. Das Nebenprodukt - im Beispielfall das "falsche" Enantiomer - wird meist aus wirtschaftlichen Gründen re-racemisiert (häufig z.B. durch pH oder Temperatur Wechsel) und nach Qualitätskontrolle dem aus der originären Reaktionsstufe kommenden Feedgemisch zugesetzt.

**Patentansprüche**

1. Verfahren zur Trennung eines Stoffgemisches mit Hilfe eines Gegenstrom-Chromatographieverfahrens, bei dem einer aus mehr als einer hintereinandergeschalteten, mit einem Adsorbens gefüllten Chromatographiesäulen bestehenden Säulenschaltung ein zu trennendes Stoffgemisch und das Eluens kontinuierlich zugeführt werden und an anderen Stellen der Säulenschaltung ein mindestens eine abgetrennte Komponente enthaltender Extraktstrom, sowie ein mindestens eine andere Komponente enthaltender Raffinatstrom kontinuierlich entnommen werden und bei dem eine Relativbewegung zwischen einer aus dem Stoffgemisch und dem Eluens bestehenden flüssigen, mobilen Phase und dem Adsorbens in fester Phase durch sequentielles Öffnen von Flüssigkeitszugabe- und -entnahmestellen entlang der Säulen erzeugt wird, **dadurch gekennzeichnet, dass** nur eine Eluenszuführpumpe und ein Eluensausgleichsbehälter, aber keine Kreislaufpumpe im Kreislauf eingesetzt wird, wobei sich die Eluenszuführpumpe direkt hinter dem Eluensausgleichsbehälter befindet.

2. Verfahren nach Anspruch 1, **dadurch gekennzeichnet, dass** höchstens 4 Pumpen im Chromatographiekreislauf eingesetzt werden.

3. Verfahren nach Anspruch 1, **dadurch gekennzeichnet, dass** mindestens eine Austragspumpe, Extrakt oder Raffinataustrag, durch ein Regelventil ersetzt ist.

4. Verfahren nach Anspruch 1, **dadurch gekennzeichnet, dass** eine automatische Ausschleusung von verunreinigtem Eluent im Kreislauf über eine online Detektion und ein Regelventil ermöglicht wird.

5. Verfahren nach Anspruch 1, **dadurch gekennzeichnet, dass** durch Messung des Recyclatstromes und die damit erzielte Redundanz über einen Messdatenabgleich die Genauigkeit der Mengenstromsteuerung erhöht wird.

6. Verfahren nach Anspruch 1, **dadurch gekennzeichnet, dass** bei der Mengenstromregelung die Einhaltung der Gesamtmassenbilanz durch eine Füllstandsregelung im Eluensausgleichsbehälter erreicht wird.

7. Anlage zur Trennung eines Stoffgemisches mit Hilfe eines Gegenstrom-Chromatographieverfahrens umfassend eine aus mehr als einer hintereinandergeschalteten, mit einem Adsorbens gefüllten Chromatographiesäulen bestehenden Säulenschaltung, bei der ein zu trennendes Stoffgemisch und das Eluens kontinuierlich zugeführt werden und an anderen Stellen der Säulenschaltung ein mindestens eine abgetrennte Komponente enthaltender Extraktstrom, sowie ein mindestens eine andere Komponente enthaltender Raffinatstrom kontinuierlich entnommen werden und bei dem eine Relativbewegung zwischen einer aus dem Stoffgemisch und dem Eluens bestehenden flüssigen, mobilen Phase und dem Adsorbens in fester Phase durch sequentielles Öffnen von Flüssigkeitszugabe- und -entnahmestellen entlang der Säulen erzeugt wird, **dadurch gekennzeichnet, dass** nur eine Eluenszuführpumpe und ein Eluensausgleichsbehälter, aber keine Kreislaufpumpe im Kreislauf eingesetzt wird, wobei sich die Eluenszuführpumpe direkt hinter dem Eluensausgleichsbehälter befindet.

**Claims**

1. Process for the separation of a substance mixture with the aid of a countercurrent chromatography process, in which a substance mixture to be separated and the eluent are continuously supplied to a column circuit consisting of more than one chromatography columns packed with an adsorbent and connected in series and in other positions of the column circuit an extract stream comprising at least one separated component, and a raffinate stream comprising at least one other component are continuously removed and in which a relative movement between a liquid, mobile phase consisting of the substance mixture and the eluent and the adsorbent in solid phase is produced by sequential opening of liquid addition and removal positions along the columns, **characterized in that** only one eluent supply pump and an eluent compensation container, but no circulation pump is employed in the circulation, the eluent supply pump being located directly downstream of the eluent compensation container.

2. Process according to Claim 1, **characterized in that** at most 4 pumps are employed in the chromatography circulation.

3. Process according to Claim 1, **characterized in that** at least one discharge pump, extract or raffinate discharge, is replaced by a control valve.

4. Process according to Claim 1, **characterized in that** an automatic discharge of contaminated eluent in the circulation is made possible by means of an online detection and a control valve.

5. Process according to Claim 1, **characterized in that** the accuracy of the mass flow control is increased by measurement of the recyclate stream and the redundancy thus achieved by means of a measured data balance.

6. Process according to Claim 1, **characterized in that** in the mass flow regulation the adherence to the total mass balance is achieved by means of a filling level regulation in the eluent compensation container.

7. System for the separation of a substance mixture with the aid of a countercurrent chromatography process comprising a column circuit consisting of more than one chromatography column packed with an adsorbent and connected in series, where a substance mixture to be separated and the eluent are continuously supplied, and in other positions of the column circuit an extract stream comprising at least one separated component, and a raffinate stream comprising at least one other component are continuously removed and in which a relative movement between a liquid, mobile phase consisting of the substance mixture and the eluent and the adsorbent in solid phase is produced by sequential opening of liquid addition and removal positions along the columns, **characterized in that** only one eluent supply pump and an eluent compensation container, but no circulation pump is employed in the circulation, the eluent supply pump being located directly downstream of the eluent compensation container.

## Revendications

1. Procédé pour la séparation d'un mélange de substances à l'aide d'un procédé de chromatographie à contre-courant, dans lequel une commutation de colonnes, constituée par plus d'une colonne de chromatographie disposées les unes derrière les autres, remplies d'un adsorbant, est alimentée en continu en un mélange de substances à séparer et en éluant et en d'autres endroits de la commutation de colonnes, un flux extrait, contenant au moins un composé séparé, ainsi qu'un flux de raffinat, contenant au moins un autre composant, sont prélevés en continu, un mouvement relatif entre une phase mobile, liquide constituée par le mélange de substances et l'éluant, et l'adsorbant en phase solide étant généré par une ouverture séquentielle de sites d'addition et de prélèvement de liquide le long des colonnes, **caractérisé en ce qu'**on n'utilise qu'une pompe d'alimentation d'éluant et qu'un récipient de compensation de l'éluant, mais pas de pompe de circulation dans le circuit, la pompe d'alimentation d'éluant se trouvant directement derrière le récipient de compensation de l'éluant.

2. Procédé selon la revendication 1, **caractérisé en ce qu'**on utilise au plus 4 pompes dans le circuit de chromatographie.

3. Procédé selon la revendication 1, **caractérisé en ce qu'**au moins une pompe d'évacuation, de l'extrait ou du raffinat, est remplacée par une soupape de régulation.

4. Procédé selon la revendication 1, **caractérisé en ce qu'**un soutirage automatique d'éluant contaminé dans le circuit est rendu possible via une détection en ligne et une soupape de régulation.

5. Procédé selon la revendication 1, **caractérisé en ce que** la précision de la commande du flux de quantités est augmentée par la mesure du flux de recyclat et la redondance ainsi obtenue via une comparaison des données de mesure.

6. Procédé selon la revendication 1, **caractérisé en ce que** lors de la régulation du flux de quantités, le bilan massique total est respecté par une régulation du niveau de remplissage dans le récipient de compensation de l'éluant.

7. Installation pour la séparation d'un mélange de substances à l'aide d'un procédé de chromatographie à contre-courant comprenant une commutation de colonnes, constituée par plus d'une colonne de chromatographie, disposées les unes derrière les autres, remplies d'un adsorbant, dans laquelle un mélange de substances à séparer et l'éluant sont alimentés en continu et en d'autres endroits de la commutation de colonnes, un flux extrait, contenant au moins un composé séparé ainsi qu'un flux de raffinat, contenant au moins un autre composant, sont prélevés en continu et dans laquelle un mouvement relatif entre une phase mobile, liquide constituée par le mélange de substances et l'éluant, et l'adsorbant en phase solide est généré par une ouverture séquentielle de sites d'addition et de prélèvement de liquide le long des colonnes, **caractérisé en ce qu'**on n'utilise qu'une pompe d'alimentation d'éluant et qu'un récipient de compensation de l'éluant, mais pas de pompe de circulation dans le circuit, la pompe d'alimentation d'éluant se trouvant directement derrière le récipient de compensation de l'éluant.

## Figur 1

Figur 2

Konzentration A, B

**Figur 3** Takt 1 des SMB-Zyklus

Takt #1

**Figur 4** Takt 2 des SMB-Zyklus

Takt #2

**Fig. 5:** Beispiel einer Racemattrennung

Eluens ⇨ Eluens1
Eluens2

EluensTank

SMB-Anlage

Racemat

Racemat
Feed Tanks

Extrakt

ExtraktTank

Extrakt
Verdampfer

Raffinat

Raffinat Tank

Raffinat
Verdampfer

**Fig 6**

## Verfahrensfließbild

Kristall
(Pulver)

Trockner

Kristall
(feucht)

Filter

Suspension

Vakuum-Batch
Kristallisator

Racemat
(Pulver)

Mixer

Wärmetausch
(Kühlung)

Racemisierung

Verdampfer

Feed

SMB
Anlage

Extrakt

Raffinat

Verdampfer

Eluens

Mutter Lauge

Eluens
Vorlage

Kondensator

Eluens
Ansatz

Abfuhr

Gasphasen
Eluens

untersättigte
Lösung

reines
Eluens

Eluens &
Kristalle

Feststoff

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3706612 A
- US 4434051 A
- US 3268605 A
- WO 9216274 A
- EP 0688590 A1
- EP 0688589 A1
- EP 0688588 A1
- DE 19833502 A1
- WO 0025885 A
- WO 9304022 A
- WO 9113046 A
- US 4499115 A
- US 5685992 A
- US 5762806 A
- EP 960642 A1
- EP 688589 B
- EP 688690 B2
- EP 688588 B1

### In der Beschreibung aufgeführte Nicht-Patentliteratur

- *Journal of Chromatography,* 1992, vol. 590, 113-117